# EUROPEAN PATENT APPLICATION

(11) **EP 2 907 669 A1**
(43) Date of publication of application: **19.08.2015**
(21) Application number: 12886462.6
(22) Date of filing: 26.10.2012
(51) Int. Cl.: B41M 1/40, B44C 1/24, F21S 10/06

(54) **3D PRINTING METHOD AND DECORATIVE PANEL AND LIGHT BOX MADE THEREBY**

(30) Priority: 11.10.2012 CN 201210384691
(71) Applicant: Hwang, Yu-chen, Xinwu Township, Taoyuan County 327 (TW)
(72) Inventor: Hwang, Yu-chen, Xinwu Township, Taoyuan County 327 (TW)
(74) Representative: Schwerbrock, Florian
(86) International application number: PCT/CN2012/001437
(87) International publication number: WO 2014/056124

(57) **Abstract**

This invention describes a method of stereoscopic printing and its application in decoration plate and light box. The stereoscopic printing method includes a substrate with concave and convex surface micro structures followed by printing with electron beam or UV light curable ink to retain the surface morphology after printing. The printing resolution should be between 5 and 20 times the density of concave and convex surface structure substrate is transparent, a high contrast image on a decoration plate or a light box can be obtained by integration of a reflective film or a back light unit.

## Description

### RELATED APPLICATIONS

This application claims priority of Taiwan Patent Application No. 101129305, filed August 13,2012, the entire disclosure of which is incorporated herein by reference.

### BACKGROUND

Three dimensional (3D) visual imaging is cataloged into two types: (a) a 3D effect to be observed directly by human eyes, (b) a 3D effect only to be observed through the assistance of tools (for example, glasses). Type (a) contains imaging methods such as Parallax Barrier (also called Black Line Stereo), Holography, Hologravure, Lenticular 3D Display, and Integral Method.

Lenticular 3D Display contains a lenticular lens with hemispherical or half cylindrical microlens placing in front of a 2D image. Different viewing angles provide different images through microlens. The difference between multiple images creates a 3D effect.

Unlike lenticular lens, Moiré effect can be achieved by mathematic calculation for the visual depth perception.

The Moiré 3D printing technology was cataloged into two types, optical grating moiré and microlens moiré (circular optical grating). The defect of moiré method is to cause visual discomfort for some people, because of short focus point. The problem can be reduced by increasing the distance of observation.

Moiré printing has its limitations in color printing due to inaccuracy in chromatography resulting in products with obvious color shifts. Moiré technology is usually used in single color printing. Color moiré printing is best to print with a specific color (special color) with four other colors to ensure the quality [I THINK NEEDS MORE INFORMATION - NOT UNDERSTANDABLE TO ME]. The 3D printing methods above contain obvious problems in color printing and there is a need for new solution. Several companies are trying to solve these problems for years; however, the solution cannot be found in normal industrial method or other product structure. As the result, it is important for the industry to have a new 3D printing method and its application in decoration plate and light box.

### BRIEF SUMMARY

This disclosure describes a method of stereoscopic printing on various material substrates to achieve a depth perception through the surface morphology from concave and convex micro-structures on a printing substrate. The resulting stereoscopic printed sheet can be used for all kinds of surface decoration and furniture decoration. A light box can also be produced by performing the stereoscopic printing on a transparent substrate with a light source.

### BRIEF DESCRIPTION OF THE DRAWINGS

For a further understanding of the present invention, reference will be made to the following detailed description of embodiments of the invention that are to be read in connection with the accompanying drawing, wherein:
FIG. 1 is a flow diagram illustrating the manufacturing process of stereoscopic printing.
FIG. 2 shows a schematic diagram of the optical principle of stereoscopic effect.
FIG. 3 shows a structural diagram of the stereoscopic printed decorative plate attached to the object to be decorated.
FIG. 4a shows a schematic diagram of the optical principle of stereoscopic effect of a printed decorative plate with reflective sheet.
FIG. 4b shows a schematic diagram of the optical principle of stereoscopic effect of a printed decorative plate with a backlight light source.
FIGs. 5a to 5e are cross-sectional views of various lens used for stereoscopic printing.
FIGs. 6a to 6d are structural diagrams of the cross-sectional views of stereoscopic printed decorative plates with various lens types.
FIG. 7 is a structural diagram of single-sided stereoscopic printed light box with a direct-type backlight.
FIG. 8 is a structural diagram of double-sided stereoscopic printed light box with edge-type light source.
FIG. 9 is another structural diagram of double-sided stereoscopic printed light box with edge-type light source.
FIG. 10 is a structural diagram of double-sided stereoscopic printed light box with a direct-type backlight.

**Numbering of key elements**

| | | | |
|---|---|---|---|
| 1 : | micro-structured printing substrate | 2 : | surface modification layer |
| 3 : | printed ink layer | 4 : | ink protection layer |
| 5 : | pressure sensitive adhesive | 6 : | object |
| 7 : | hemispherical lens sheet | 8 : | reflective sheet |
| 9 : | prism lens sheet | 10 : | parallel composite lens sheet |
| 11 : | vertical composite lens sheet | | |
| 12 : | parallel double lenticular composite lens | | |
| 13 : | direct-type light source | 14 : | frame |
| 15 : | edge-type light source | A : | modifier nozzle |
| B : | high speed dryer | C : | ink nozzle |
| D : | UV light source | E : | protection paint nozzle |
| F : | dryer | G : | printed areas |
| H : | blank areas | L : | left eye |
| R : | right eye | | |
| 20, 21, 22: | decorative plates | | |

### DETAILED DESCRIPTION

This invention is to overcome defects of the current three-dimensional (3D) printing methods to provide a new stereoscopic printing method and its application in decoration plate and light box. Select a printing technology which allows fast drying in ink to maintain the surface morphology of the printing substrate. The printing substrate has concave and convex surface morphology which creates a difference in focus distance between left and right eyes and achieves a visual depth perception. This method is similar to Moiré method, but without the issues of inaccuracy and color shift in color printing. Digital printing enables this method for use in flexible production of small quantity yet with diverse printing jobs.

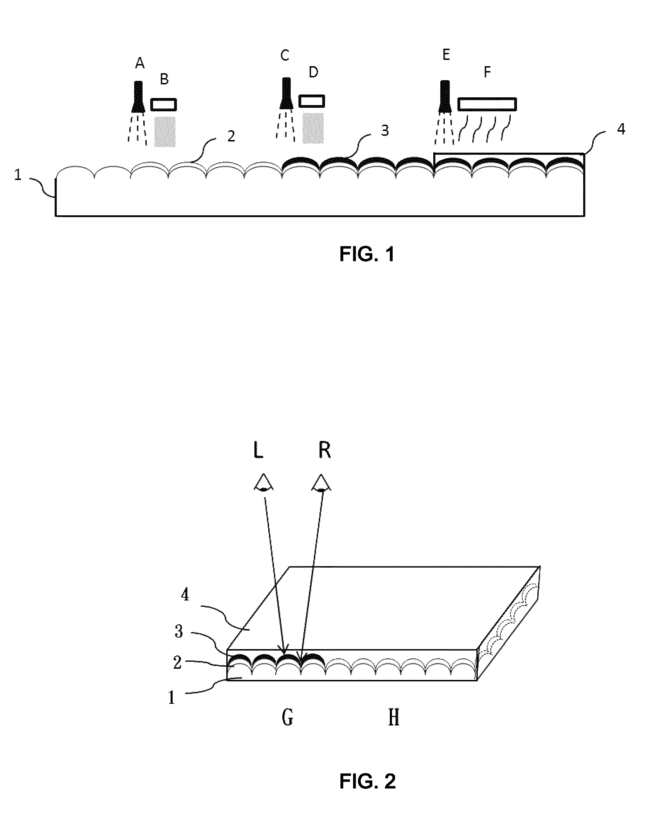

As shown in FIG. 1, a schematic flow diagram for the stereoscopic printing process is illustrated. On the micro-structured printing substrate 1, a quick-drying surface modification layer 2 could be applied through a modifier nozzle A. The surface modification layer 2 is dried with a high speed dryer B to improve the adhesion of the printing ink to the micro-structured printing substrate 1. The high speed dryer B is usually a high-temperature oven or an infrared heater. A high-resolution digital printed ink layer 3 is applied through a spray ink nozzle C, and then dried with an ultraviolet UV light source D or electron beam to harden the ink very quickly and prevent the ink from flowing and leveling the concave and convex morphology micro-structured printing substrate 1. Then, an ink protection layer 4 is coated through a protection paint nozzle E on the printed ink layer 3. The ink protection layer 4 is dried by another dryer F to achieve required hardness and protect the printing from scratches or damages. If there is no issue from the drying speed or adhesion of printed ink layer 3 to the substrate, the surface modification layer 2 can be omitted.

This invention is based on the following steps to solve the industrial problems. A stereoscopic printing method uses electron beam or UV light hardening printing ink to print on a surface with concave and convex micro structures. The ink hardening speed should be faster than the flowing motion of the ink in order to maintain the surface morphology of the printing substrate.

A UV-curable ink is an environmentally friendly fast-drying ink without volatile organic compounds (VOC), and can be printed directly on difficult-to-print surfaces, e.g. plastic (PET, PVC) and other non-absorbent material. The low molecular weight monomers in the ink liquid can be converted to polymers by UV irradiation. The polymer resin film forms a printed ink layer 3 on the surface of printing substrate, and therefore can be printed directly on the non-absorbent material.

Furthermore, the stereoscopic printing method can have additional surface modification layer 2 which contains photo-initiators to reduce the ink setting time to less than 25 seconds. Furthermore, an optional ink protection layer 4 outside of printed layer can be used to prevent scratches and damage of the printed images.

Furthermore, the said substrate used for the stereoscopic printing method is a transparent sheet containing micro structures morphology at one or both sides of the printing substrate. Said micro structures are selected from shapes of prism, half hemispherical, half cylindrical (lenticular) or pyramid lens or a combination of above.

As shown in FIG. 2, viewers have different focus distance from right eye (R) and the left eye (L) images which create the depth perception of printed area G. The focus distances from left eye and right eye change along with the movement of viewer's position and result in a lively visual effect.

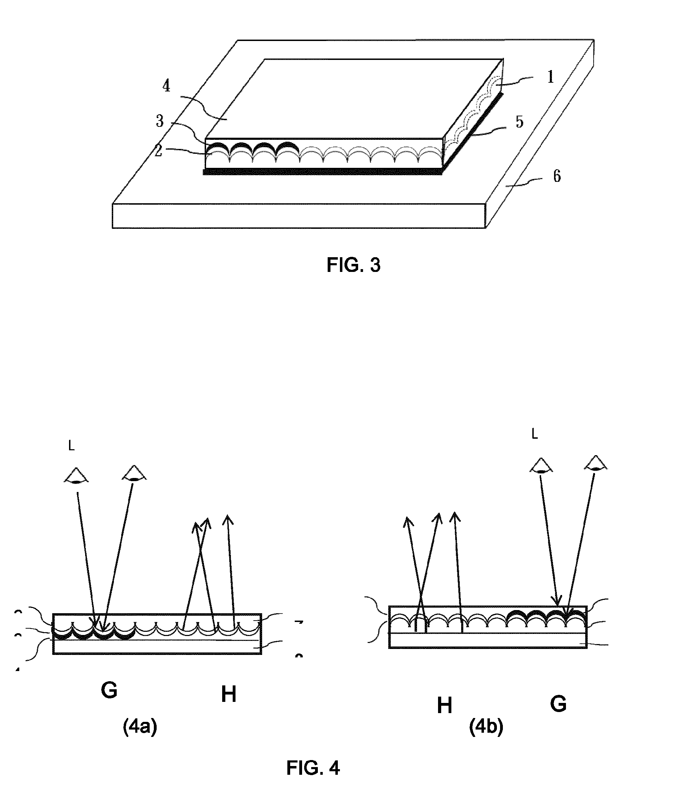

Furthermore, the stereoscopic printed decoration plate comprises a pressure sensitive adhesive 5 and a release liner. After removing the release liner, the printed decoration plate can be attached to the object 6 for decoration, as shown in FIG. 3. The material of object 6 may be plastic, metal, ceramic, glass or wood. If the object 6 is a transparent film or sheet, the stereoscopic printed decoration plate can be attached to the object 6 with either side of the plate with a pressure sensitive adhesive 5. An observer can see the stereoscopic decoration effect while maintaining the original touch and feel of the object. The transparent object 6 may be glass, transparent plastic or the transparent metal film.

Therefore, the present invention provides a stereoscopic printed decoration plate by printing on the concave and convex surface of a printing substrate with ink that can be dried quickly with electron beam or UV light. Then, a protection layer is added on the printed image to prevent scratch or damages.

Furthermore, the stereoscopic printing can be performed on a transparent glass or plastic with concave and convex surface morphology.

Furthermore, the transparent printing substrate has 1-sided or 2-sided surface structures of prism, hemispherical, half cylindrical and pyramid morphology lens, or a combination of above.

The present example uses a digital printing method with a resolution of more than 800 dots per inch. For the micro-structured printing substrate 1, the dimension of concave and convex surface structure is also very small, e.g. 10000-200000 lens per square inch for hemispherical lens sheet 7. Therefore, printing on a micro-structured printing substrate 1 can produce the desired visual stereoscopic effect, and does not significantly impact the resolution of the printed image.

High density of hemispherical lens results in less decrease in resolution, but less in three-dimensional effect. Using an industrial-grade digital inkjet printer with resolution of 1000 dots per inch (equivalent to 1 million points per square inch) as an example, the density of hemispherical lens is best to be between 50000 and 200000 lenses per square inch. In other words, the best relationship between printing resolution and lens density is between 5:1 and 20:1. The selection criteria of hemispherical lens shall be based on the performance of 3D resolution.

The above-described stereoscopic printing decorative plate is preferably with a printing resolution 5 to 20 times the density to the concave and convex structure of the printing substrate.

The contrast ratio of prior mentioned stereoscopic printed decorative plate can be further improved when it's combined with a reflective sheet 8, as shown in FIG. 4a. The ambient light at the blank areas H can be reflected to observer direction by hemispherical lens sheet 7 and reflective sheet 8. The brightness increase at blank region H results in overall contrast ratio enhancement of the resulting stereoscopic decoration plate.

When stereoscopic printed decoration plate is made of a transparent substrate and a light source, direct-type light source 13 or edge-type light source 15, the contrast ratio is further improved, as shown in FIG. 4b. For the printed area G, the viewer experiences a depth perception due to the difference of focus distances from left eye L and right eye R. For the blank areas H, the lens structures of the hemispherical lens sheet 7 concentrate and redirect the light from backlight unit to the observer and result in an increase of the local brightness and overall contrast ratio of printed images. Thus, a high contrast stereoscopic printed light box can be achieved by a stereoscopic printed decorative plate with an edge-type or direct type backlight.

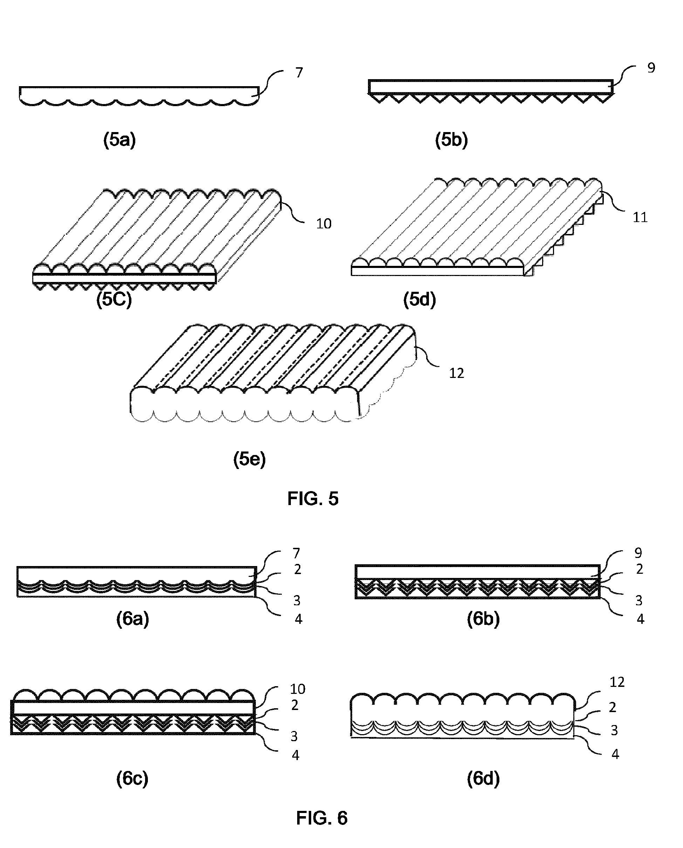

As shown in Fig 5a to 5e, there are several types of concave and convex lenses that can be chosen or combined to achieve a balanced stereoscopic effect with good contrast performance. FIG. 5a to 5e illustrate the cross-sectional view of the lenses for stereoscopic printing substrates in single-sided or double-sided micro structures. For single-sided lens sheet, the lens substrate is selected from hemispherical lens sheet 7, prism lens sheet 9, half cylindrical, pyramid lens sheet, etc. For double-sided composite lens sheet, one surface is lenticular lens and the other surface is selected from prism, hemispherical, half cylindrical, pyramid lens structure or their combination. Parallel composite lens sheet 10 has a set of prism lenses aligned in parallel direction with a set of lenticular lenses. The vertical composite lens sheet 11 has a vertical aligned lenticular composite lens with prism lens. Prism and pyramid lenses provide a good light converging effect and the hemispherical lens provides good light distribution effect, and half cylinder lenticular lens can provide a better three-dimensional visual effect. Parallel double lenticular composite lens 12 is another example of a parallel composite lens sheet.

A stereoscopic printed decorative plate can be achieved with proper selection of various lens structures on printing substrate and the option of integrating a reflective sheet 8 for brightness enhancement at blank areas H and light box for different aesthetic effects. The reflective sheet 8 (FIG. 4) may be selected from a metal plate or a substrate with a high refractive index surface coating.

The micro structures are selected from prism, hemispherical, half cylindrical or pyramid lens structure on one side of the printing substrate. On the other side of printing substrate, it is either a flat surface or micro structures of prism, hemispherical, half cylindrical or pyramid lens structure.

Using the lenses shown in FIGs. 5a to 5e with the addition of the surface modification layer 2, the printed ink layer 3 and the ink protection layer 4, provide the corresponding stereoscopic printed decoration plates, as shown in FIGs. 6a through 6d. Lenticular lens can further enhance the stereoscopic effect; therefore, the lenticular lens of a composite lens sheet generally faces the observer side.

The micro-structured printing substrate 1 can be made of acrylic, polycarbonate or other polyester-based (polyester) materials, wherein the light transmission and light guide effect of the acrylic material is the best. Acrylic lens sheet can be manufactured by an injection molding process to provide single-sided or double-sided lens sheet.

One example disclosed is a stereoscopic printed light box containing a stereoscopic printed decoration plate and a light source from light emitting diodes or organic light emitting diodes.

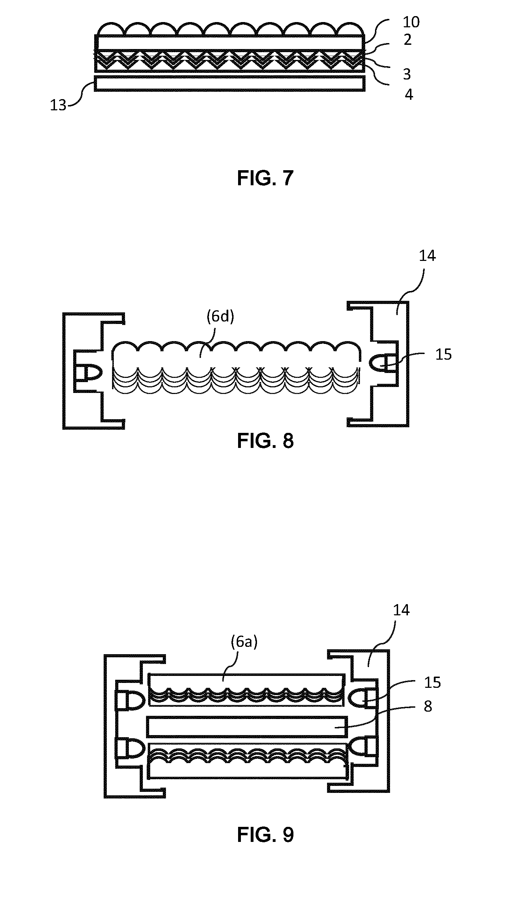

A printed decoration plate (FIG. 6c) can be obtained by the use of parallel composite lens sheet 10, followed with printing and protection layer coating process. As shown in FIG. 7, further integration of a direct-type light source 13 forms a single-sided light box containing stereoscopic printed decoration plate (FIG. 6c). The direct-type light source 13 is a plane light source selected from organic light-emitting diode (Organic Light Emitting Diode, OLED) or an array of light-emitting diode (Light Emitting Diode, LED) point light sources with a diffuser.

As shown in FIG. 8, a double-sided light box can be achieved by assembling a parallel double lenticular composite lens 12 and an edge-type light source 15. A frame 14 is used to assemble the printed decoration plate 22 , edge-type light source 15, a light emitting diode to form a thin transparent light box. A bendable light box can be achieved when the frame 14 is a flexible material and combined with the flexible OLED light source. If a reflective sheet is added onto one side of the double-sided light box, the light can only go through the other side. Then, a single-sided light box is rendered. The light source may be an organic or inorganic light emitting diode.

Another version disclosed is a stereoscopic printed light box including a stereoscopic printed decoration plate, a reflection sheet, light sources and a frame. Furthermore, the light source can be an organic or inorganic light emitting diode placed under or arround the stereoscopic printed decoration plate. The stereoscopic printed decoration plate and light source are assembled with a frame.

Another version disclosed is a light box containing the stereoscopic printed decoration plate based on a composite lens sheet, a group of light sources and a frame. The lens structures on both sides of the composite lens sheet are selected from the prism, hemispherical, half cylinder, pyramid lens or their combination. The light source is an organic or inorganic light emitting diode placed under or around the stereoscopic printed decorative plate. The stereoscopic printed decoration plate and light source are assembled with a frame.

Using hemispherical lens sheet 7 as an example, a thin double-sided stereoscopic printed light box contains two printed decorative plates 20 separated with a reflective sheet 8, and a set of LEDs as edge-type light source 15 located at the edges of the decoration plates 20 and assembled with the frame 14, as shown in FIG. 9. Reflective sheet 8 separates the two sets of stereoscopic printed decoration plates, so that the images of the two stereoscopic printed decoration plates can be different.

Furthermore, herein disclosed is a double-sided stereoscopic printed light box containing two of prior described stereoscopic printed decoration plates, at least one reflective sheet, two sets of light sources and a frame. The reflective sheet is placed between two stereoscopic printed decoration plates, and the light source is an organic or inorganic light emitting diodes. All the components are assembled with a frame. Two stereoscopic printed decoration plates may contain different printing contents.

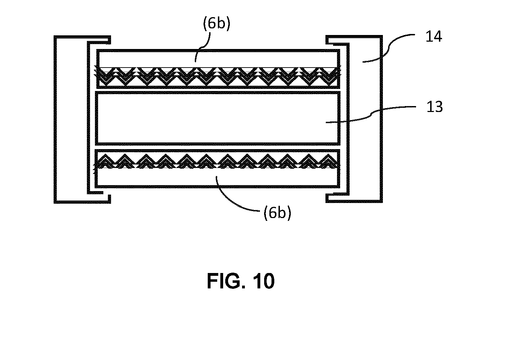

As shown in FIG. 10, a transparent double-sided stereoscopic printed light box was disclosed by placing two stereoscopic printed decoration plates 21 on each side of a direct-type light source 13, and assembled by a frame 14. The light source can be an organic emitting diode. If a transparent electrode is used for the organic light emitting diodes, a transparent double-sided stereoscopic printed light box can be formed. If the OLED light source is not transparent, there is only one side of the image being lit. The printing contents at both sides of light box can be different.

Comparing with existing technology, a light box created with this invention has the following advantages.
1. This stereoscopic printing method can be printed directly on the concave and convex surface and provide a stereoscopic printed decoration plate.
2. There is no problem with inaccuracy when performing color printing.
3. Although the 3D effect is more obvious with Hologravure method (half cylindrical microlens), this invention has a better view angle and prevents dizziness for long time observation. In addition, these methods can achieve both obvious 3D and less viewing angles when the transparent printing substrate has a micro structure on both sides.
4. When a micro structured light guide plate is used as the printing substrate, one or both side stereoscopic printed light box can be achieved through the combination with light sources of direct-type or edge-type light emitting diodes.
5. When a micro structured light guide plate is used as the printing substrate, the micro structure has a brightness enhancement effect at the blank areas (H),resulting in better brightness contrast of images.

In conclusion, this disclosure describes a method of stereoscopic printing and its application in decorative plates and light boxes. Such printing method includes a substrate with concave and convex surface morphology followed by printing with an electron beam or UV light curable ink to retain the surface structure after printing. The resolution of printed image should be between 5 and 20 times higher than the density of the concave and convex surface structure to create the decoration plate with visual depth perception. If the micro structured substrate is transparent, a high contrast image on a decorative plate or a light box can be obtained with an integration of reflective film and back light unit.

In order to achieve comparable test results, all the materials are the same for all examples below, including ink, printer, surface modifier and ink protecting material. Of course, there are equivalent materials and equipment that can achieve equivalent effect. Therefore, these examples should not be used to limit the scope of the present invention.

Mitsubishi Diamond 10-color printer was used. Rubber clothes were from Reeves Brother Isotec and rubber cleaning system was from Baldwin Impact. Graphite ink roller was Diamond brand Blue Max and UV-Oxy ink roller cleaning fluid was used. Ink-Systems DG931 washing fluid was used before switching to hybrid UV printing. Every gallon of water tank solution contains a mix of three units 2451U (Printer's Service Company) and two units of non-alkali alcohol alternative solution. Radiants UV light was used with power of 450 watts / sq.in. One set of UV source was installed on the seventh units and the tenth unit, and three sets of UV sources were installed on Glazing Block. UV energy is 30% higher than the average UV printing technology. Printing ink was mainly Hybrid UV-Ink Systems (Hybrid UV ink) from Dynagraf Company.

Sometimes, it is difficult to prevent ink from flowing and leveling before hardening by simply applying more UV power, especially when the object for printing have protruded surfaces with big difference in height. The ink is generally epoxy acrylic material. A small amount of photoinitiator can be added into the surface modification layer to improve hardening speed. The concentration of the photoinitiator should be about 0.1-3% when dried. The goal is to dry and hardening the ink within 25 seconds.

### Example #1

An acrylic sheet, 120cm long and 80cm wide, has one-side hemispherical lens structure in lens density of 100,000 per square inch, which was coated with surface modification layer 2 to increased ink adsorption and drying speed. The printing and drying processes were accomplished through an ultraviolet industrial grade digital inkjet printer. The resolution of the printed ink layer 3 is 1000 dots per inch which equivalents to 1 million points per square inch. Then, a transparent ink protection layer 4 was applied on the printed ink layer 3 to provide the stereoscopic printed decoration plate. The protection layer is usually made of acrylic resin or epoxy resin with inorganic particles. The printing resolution is 10 times the density of the lens structures, and resulting in decoration plate with excellent stereoscopic effect and image resolution.

Twenty OPTO 36 watts LEDs were placed at two edges of the stereoscopic printed decoration plate. Aluminum extrusion shaped frame, straps and screws were used to assemble decoration plates, LEDs and reflective sheet to provide a single sided stereoscopic printed light box.

### Example #2

An acrylic sheet, 120cm long and 80cm wide, has one-side hemispherical lens structure in lens density of 40,000 per square inch, which was coated with surface modification layer 2 to increased ink adsorption and drying speed. Same printing resolution and printing process were used as the example # 1. The printed ink layer 3 has image resolution of 1000 dots per inch (equivalent to 1 million points per square inch). A hard coat layer was applied on the printed as the ink protection layer 4, which is the acrylic resin or epoxy resin. This forms a stereoscopic printing decoration plate. The printing resolution of this example was 25 times the density of the lens structures, and resulting printing having excellent stereoscopic effect with a sacrifice of resolution.

### Example #3

An acrylic sheet, 120cm long and 80cm wide, has one-side hemispherical lens structure in lens density of 100,000 per square inch, which was coated with surface modification layer 2 to increased ink adsorption and drying speed. The printing and drying processes were accomplished through an ultraviolet industrial grade digital inkjet printer. The resolution of the printed ink layer 3 is 500 dots per inch which is equivalent to 250,000 points per square inch. A hard coat layer was applied on the printed as the ink protection layer 4, which is the acrylic resin or epoxy resin. This forms a stereoscopic printing decoration plate. The printing resolution of this example was 2.5 times the density of the lens structures, resulting in a decorative plate with no stereoscopic effect.

### Example #4

An acrylic sheet, 120cm long and 80cm wide, has a one-side hemispherical lens structure in lens density of 120,000 per square inch. A half cylindrical lens sheet was attached to the other side of acrylic sheet with pressure sensitive adhesive to produce a composite lens sheet with hemispherical lens and half cylindrical lens. The thickness of the half cylindrical lens sheet is generally 0.2-0.6 mm, and this example uses a material of 0.4 mm. The spacing of lenticular lenses was 150 per inch. A surface modification layer 2 was coated on the hemispherical lens side, and then followed by the application of a printed ink layer 3 and an ink protection layer 4 to provide a stereoscopic printed decoration plate.

Twenty OPTO 36 watts LED were sealed with a rubber frame and assembled onto both sides of the stereoscopic printed decoration plate to provide a double-sided light-emitting soft transparent light box, as shown in FIG. 8.

### Example #5

The non-structured side of a Vikuiti film prism lens sheet from the 3M company was attached to the non-structured side of a half cylindrical lens sheet with a pressure sensitive adhesive to provide a vertical composite lens sheet 11, which is 0.6 mm in thickness with density of 200 per inch for half cylindrical lens sheet. A surface modification layer 2, printed ink layer 3 and ink protection layer 4 were coated on the prism side of the composite sheet and resulted in a stereoscopic printed decoration plate.

A sheet of OSRAM Company of ORBEOS organic light-emitting diode in 9 cm ax 9 cm was used as a direct-type light source 13. The luminous efficiency was 14 lumens (Lm) per watt, luminance 2800nits, color temperature below 2800K, and the color rendering index was about 86. A direct-type light source 13 was placed between two decoration plates based on vertical complex lens sheet 11. Rubber border sealant was used to assemble two printed decoration plates, and the organic light-emitting diodes to produce a stereoscopic printing light box.

Moreover, as those of skill in this art will appreciate, many modifications, substitutions and variations can be made in and to a method of making stereoscopic printing and the decoration plate and light box made of this invention without departing from its spirit and scope. In light of this, the scope of the present invention should not be limited to that of the particular embodiments illustrated and described herein, as they are only exemplary in nature, but instead, should fully commensurate with that of the claims appended hereafter and their equivalents.

## Claims

1. A stereoscopic printing method comprising applying an electron beam or ultra violet (UV) light hardening printing ink on a surface with concave and convex micro-structures printing substrate,
wherein the speed of ink hardening is faster than the flowing motion of the ink to maintain the surface morphology of micro-structured substrate,
wherein the printing resolution is between 5 and 20 times the density of the micro structures on the substrate.

2. A stereoscopic printing method according to claim 1, further comprising applying a surface modification layer containing photo-initiators on the said micro-structured printing substrate prior to the application said printing ink to enhance the ink hardening speed to less than 25 seconds, and an ink protection layer outside of ink layer to prevent scratches and damages of the printed ink.

3. A stereoscopic printing method according to claim 1, wherein the said micro- structured printing substrate is a transparent sheet containing micro structures at one or both sides, wherein the said micro structures are selected from shapes of prism, half hemispherical, half cylindrical or pyramid lens or a combination of above.

4. A stereoscopic printed decoration plate comprising a substrate with surface micro structures in concave and convex geometries, a printed ink layer on the micro structured surface and an ink protection layer outside of printing layer,
wherein the printing ink has been dried or hardened by electron beam or UV light to retain the micro structure morphology.

5. A stereoscopic printed decoration plate according to claim 4, wherein the substrate is made of transparent material selected from plastics, glass, or metalized plastic film.

6. A stereoscopic printed decoration plate according to claim 5, wherein the said surface micro structures are selected from prism, hemispherical, half cylindrical or pyramid lens or a combination of above.

7. A stereoscopic printed decoration plate according to claim 4, wherein said substrate comprises a pressure sensitive adhesive layer and a release liner attached to the substrate at the side without micro structures.

8. A stereoscopic printed decoration plate according to claim 4, wherein said printed ink layer has a printing resolution of 5 to 20 times of the density of said micro structures.

9. A stereoscopic printed decoration plate according to claim 5, further comprising a reflector to enhance color contrast.

10. A stereoscopic printed light box comprising a stereoscopic printed decoration plate according to claim 5, a light source of light emitting diodes or organic light emitting diodes positioned underneath or at either side of the said stereoscopic printed decoration plate.
